# EUROPEAN PATENT APPLICATION

(11) **EP 3 509 311 A1**
(43) Date of publication of application: **10.07.2019**
(21) Application number: 19150899.3
(22) Date of filing: 09.01.2019
(51) Int. Cl.: H04N 21/422, H04N 21/44, H04N 21/442, H04N 21/475, H04N 21/466

(54) **ELECTRONIC APPARATUS, USER INTERFACE PROVIDING METHOD AND COMPUTER READABLE MEDIUM**

(30) Priority: 09.01.2018 KR 20180002891
(71) Applicant: Samsung Electronics Co., Ltd., Suwon-si, Gyeonggi-do, 16677 (KR)
(72) Inventor: SOH, Jaemin, Gyeonggi-do (KR); KIM, Sangyoon, Gyeonggi-do (KR); KIM, Hyungrae, Gyeonggi-do (KR); AHN, Youngchun, Gyeonggi-do (KR)
(74) Representative: Appleyard Lees IP LLP

(57) **Abstract**

The present disclosed relates to artificial intelligence (Al) system using machine leaning algorithm and application thereof. An electronic apparatus is provided. The electronic apparatus according to an exemplary embodiment includes an inputter configured to receive an image from an external device, and a processor configured to analyze a context of the external device based on the received image, and control to display a user interface (Ul) including at least one key corresponding to the analyzed context of the external device.

## Description

### CROSS-REFERENCE TO RELATED APPLICATIONS

This application claims priority from Korean Patent Application No. 10-2018-0002891, filed on January 9, 2018, in the Korean Intellectual Property Office, the disclosure of which is incorporated herein by reference in its entirety.

### BACKGROUND

### 1. Field

Devices and methods consistent with what is disclosed herein relate to an electronic apparatus, a user interface providing method, and a recording medium, and more particularly, to an electronic apparatus for providing a key input UI corresponding to a context of an external device analyzed through an image input from the external device, a UI providing method, and a recording medium.

### 2. Description of the Related Art

A Multi Brand Remote controller (MBR) technique that incorporates multiple remote controllers into one to control a plurality of devices such as a TV, a set-top box, or the like by using a single remote control device has been widely used.

However, conventionally, there is a problem in that, in controlling a TV or the like, it is impossible to grasp the viewing situation of a user and to respond in advance, but it ends up providing functions passively in accordance with user determination and input.

An artificial intelligence (Al) system is a system which implements human-level intelligence, in which the machine trains itself and determines. The more the artificial intelligence system is used, the higher the recognition rate.

The artificial intelligence technology includes a machine learning (e.g., deep-learning) technique using algorithm that classify or train the feature of input data by itself, and element techniques that simulate functions of recognition, determination, etc. of human brain by using a machine learning algorithm.

The element technology include at least one of, for example, linguistic understanding for recognizing human language/character, visual understanding for recognizing objects as if they are perceived by human being, reasoning/prediction for determining information and logically reasoning and predicting the information, knowledge representation for processing experience information of human being as knowledge data, and motion control for controlling autonomous driving of a vehicle, movement of a robot, etc.

The above information is presented as background information only to assist with an understanding of the disclosure. No determination has been made, and no assertion is made, as to whether any of the above might be applicable as prior art with regard to the disclosure.

### SUMMARY

An aspect of the exemplary embodiments relates to providing an electronic apparatus for analyzing a context of an external device based on an input image and providing a contextual UI based on the analyzed context, a UI providing method, and a recording medium.

According to an exemplary embodiment, there is provided an electronic apparatus including an inputter configured to receive an image from an external device, and a processor configured to analyze a context of the external device based on the received image, and control to display a user interface (Ul) including at least one key corresponding to the analyzed context of the external device.

The processor may control to display the UI including the at least one key for controlling the external device in the analyzed context of the external device among a plurality of keys for controlling the external device.

The processor may control to display a UI corresponding to a type of the received image, and the type of the received image is one of a real-time broadcasting image, an image pre-stored in the external device, and an image including a specific Ul.

The processor, based on a UI requiring a key input being included in the image received from the external device, may control to display a UI including at least one key that is input to the UI requiring the key input among the plurality of keys.

The processor, based on the image including the UI requiring the key input received from the external device being displayed while a focus controlled by a remote control device is being disposed on the UI requiring the key input, may control to display the UI including the at least one key that is input to the UI requiring the key input among the plurality of keys.

The UI requiring the key input may include an input window for inputting at least one of access information and authentication information.

The processor, based on an image including a UI for a specific key being received from the external device according to a control command for displaying specific keys while the image received from the external device is being displayed, may control to display a UI including at least one key available for the displayed image among the specific keys.

The processor, based on key use history in the analyzed context of the external device, may control to display a UI including a key corresponding to the key use history among the at least one key corresponding to the analyzed context of the external device.

The processor, based on the key use history, may identify the key used in the analyzed context of the external device among the at least one key, and control to display a UI including the used key.

According to an exemplary embodiment, there is provided a method of providing a user interface (Ul) for an electronic apparatus, the method including receiving an image from an external device, analyzing a context of the external device based on the received image, and controlling to display a user interface (Ul) including at least one key corresponding to the analyzed context of the external device.

The controlling may include controlling to display the UI including the at least one key for controlling the external device in the analyzed context of the external device among a plurality of keys for controlling the external device.

The controlling may include controlling a UI corresponding to a type of the received image, and wherein the type of the received image is at least one of a real-time broadcasting image, an image pre-stored in the external device or an image including a specific Ul.

The controlling may include, based on a UI requiring a key input to the image received from the external device being included, controlling to display the UI including the at least one key that is input to the UI requiring the key input among the plurality of keys.

The controlling may comprise, based on the image including the UI requiring the key received from the external device being displayed while a focus controlled by a remote control device is being disposed on the UI requiring the key input, controlling to display the UI including the at least one key that is input to the UI requiring the key input among the plurality of keys.

The UI requiring the key input may include an input window for inputting at least one of access information or authentication information.

The controlling may include based on an image including a UI for specific keys being received from the external device according to a control command for displaying the specific keys while the image received from the external device is being displayed, controlling to display a UI including at least one key available for the displayed image among the specific keys.

The controlling may include, based on key use history in the analyzed context of the external device, controlling to display a UI including a key corresponding to the key use history of the at least one key corresponding to the analyzed context of the external device.

The processor may identify the key used in the analyzed context of the external device among the at least one key based on the key use history, and control to display a UI including the identified key.

According to an exemplary embodiment, there is provided a non-transitory computer readable medium storing at least one computer instruction which, when executed by a processor, causes an electronic apparatus to perform operations, wherein the operations include receiving an image from an external device, analyzing a context of the external device based on the received image, and controlling to display a user interface (Ul) including at least one key corresponding to the analyzed context of the external device.

According to the above-described various exemplary embodiments, a user may be automatically provided with a UI having only the keys necessary for the user without further manual operation since a customized UI is provided to an electronic apparatus according to an image view by the user and a context of an external device that provides the image.

### BRIEF DESCRIPTION OF THE DRAWINGS

FIG. 1 shows a UI providing system according to an embodiment of the disclosure;
FIG. 2 is a block diagram to explain configuration of an electronic apparatus according to an embodiment of the disclosure;
FIG. 3 shows a method for providing a UI depending on a context according to an embodiment of the disclosure;
FIGS. 4A, 4B and 4C show a method for providing a UI depending on a context according to an embodiment of the disclosure.
FIGS. 5A and 5B show a method for providing a UI depending on a context according to an embodiment of the disclosure.
FIGS. 6A and 6B show a method for providing a UI depending on a context according to an embodiment of the disclosure.
FIGS. 7A and 7B show a method for providing a UI depending on a context according to an embodiment of the disclosure.
FIG. 8A shows a method for providing a UI depending on a context according to an embodiment of the disclosure.
FIG. 8B shows a method for providing a UI depending on a context according to an embodiment of the disclosure.
FIG. 8C shows a method for providing a UI depending on a context according to an embodiment of the disclosure.
FIG. 9 is a block diagram to explain detailed configuration of an electronic apparatus according to various embodiments of the disclosure; and
FIG. 10 is a flowchart to explain a method for providing a UI according to an embodiment of the disclosure.

### DETAILED DESCRIPTION

Before describing the disclosure in detail, the description of the specification and drawings will be made.

All the terms used in this specification including technical and scientific terms have the same meanings as would be generally understood by those skilled in the related art. However, these terms may vary depending on the intentions of the person skilled in the art, legal or technical interpretation, and the emergence of new technologies. In addition, some terms are arbitrarily selected by the applicant. These terms may be construed in the meaning defined herein and, unless otherwise specified, may be construed on the basis of the entire contents of this specification and common technical knowledge in the art.

The disclosure is not limited to an embodiment disclosed below and may be implemented in various forms and the scope of the disclosure is not limited to the following embodiments. In addition, all changes or modifications derived from the meaning and scope of the claims and their equivalents should be construed as being included within the scope of the disclosure. In the following description, the configuration which is publicly known but irrelevant to the gist of the disclosure could be omitted.

The terms such as "first," "second," and so on may be used to describe a variety of elements, but the elements should not be limited by these terms. The terms are used simply to distinguish one element from other elements. The use of such ordinal numbers should not be construed as limiting the meaning of the term. For example, the components associated with such an ordinal number should not be limited in the order of use, placement order, or the like. If necessary, each ordinal number may be used interchangeably.

The singular expression also includes the plural meaning as long as it does not differently mean in the context. In this specification, terms such as 'include' and 'have/has' should be construed as designating that there are such features, numbers, operations, elements, components or a combination thereof in the specification, not to exclude the existence or possibility of adding one or more of other features, numbers, operations, elements, components or a combination thereof.

In an exemplary embodiment, 'a module', 'a unit', or 'a part' perform at least one function or operation, and may be realized as hardware, such as a processor or integrated circuit, software that is executed by a processor, or a combination thereof. In addition, a plurality of 'modules', a plurality of 'units', or a plurality of 'parts' may be integrated into at least one module or chip and may be realized as at least one processor except for 'modules', 'units' or 'parts' that should be realized in a specific hardware.

Hereinafter, embodiments of the disclosure will be described in detail with reference to the accompanying drawings so that those skilled in the art can easily carry out the disclosure. However, the disclosure may be embodied in many different forms and is not limited to the embodiments described herein. In order to clearly illustrate the disclosure in the drawings, some of the elements that are not essential to the complete understanding of the disclosure are omitted for sharpness, and like reference numerals refer to like elements throughout the specification.

In the disclosure, 'at least one of a, b or c' means 'only a, only b, only c, both a and b, both a and c, both b and c, all of a, b, and c, or variations thereof.

Hereinafter, the disclosure will be described in greater detail with reference to drawings attached herein.

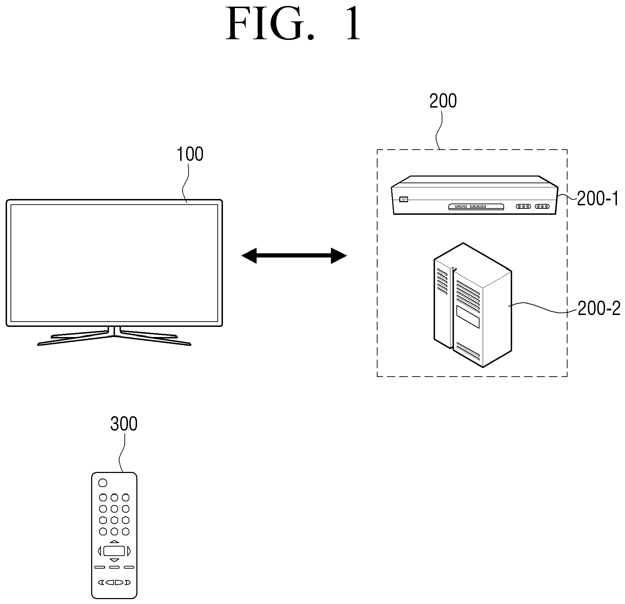

FIG. 1 shows a UI providing system according to an embodiment of the disclosure.

Referring to FIG. 1, an electronic apparatus 100 may receive an image from an external device 200 and display the received image.

For example, the electronic apparatus 100 may be embodied as a TV, and may receive an image from an external device 200-1 such as a set-top box, etc. or from an external device 200-2 such as a server for providing a service such as Video On Demand (VOD) by being connected to the electronic apparatus 100 through a network, and display the received image.

The TV may be an analog TV, a digital TV, a 3D TV, a smart TV, an LED TV, an OLED TV, a plasma TV, a monitor, a curved TV having a screen with a fixed curvature, a flexible TV having a screen with a fixed curvature, a bended TV having a screen with a fixed curvature, and/or a curvature variable TV capable of changing the curvature of the screen by a received user input.

A remote control device 300 may control the electronic apparatus 100. For example, the remote control device 300 may be embodied as a remote controller manufactured by the same manufacturer as the electronic apparatus 100 and may control various operations of the electronic apparatus 100.

The remote control device 300 may be embodied as a multi-brand remote control, and may control the various operations of the external device 200-1 connected to the electronic apparatus 100 other than the electronic apparatus 100.

The electronic apparatus 100 may display a user interface (Ul) including graphical icons, visual indicators, and keys 355 of the remote control device 300 used for controlling the external device 200. Hereinafter, "keys" are used to explain the features of Ul, but the graphical icons or buttons, or the visual indicators may be used.

When a key is selected, the remote control device 300 may directly transmit a control command for controlling the external device 200 to the external device 200-1 according to the selected key. The remote control device 300 may transmit the control command to the electronic apparatus 100, and the electronic apparatus 100 may transmit the control command received from the remote control device 300 to the external devices 200-1 and 200-2.

The electronic apparatus 100 may analyze the context of the external device 200 based on the image input from the external device 200, and display only the key corresponding to the analyzed context of the external device 200.

In other words, there are various keys used for controlling the external device 200, but keys to be used could vary depending on the context of the external device 200. Therefore, providing irrelevant keys may cause inconvenience to a user.

Accordingly, the electronic apparatus 100 may analyze the context of the external device 200, and automatically display a user interface (Ul) including only keys suitable for the context of the external device 200, thereby improving the convenience of a user and reducing a time for a user to select a key.

Hereinafter, a method for providing a UI by the electronic apparatus 100 will be described in detailed according to various embodiments of the disclosure.

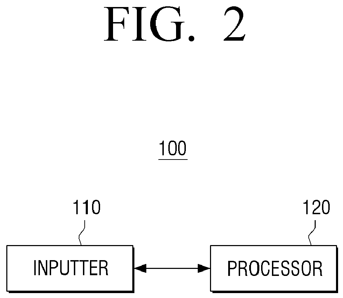

FIG. 2 is a block diagram to explain configuration of an electronic apparatus according to an embodiment of the disclosure.

Referring to FIG. 2, an electronic apparatus 100 may include an inputter 110 and a processor 120.

The inputter 110 may receive an image from the external device 200. For example, the inputter 110 may receive real-time broadcasting contents received from a broadcasting station (not shown) by the external device 200, or contents provided through the VOD service. The inputter 110 may receive an image including various Uls (e.g., a UI for requesting a user command or a UI for providing specific information) provided by the external device 200.

The inputter 110 may comprises at least one circuitry, and the inputter 110 may be connected to the external device 200 by having at least one of a High-Definition Multimedia Interface (HDMI) terminal, a component terminal or a USB terminal, or connected to the external device 200 through a network by having a communication module to be connected to a network such as Internet.

The processor 120 may control the overall operation of the electronic apparatus 100.

The processor 120 may analyze the context of the external device 200 based on the image input from the external device 200.

The context of the external device 200 may be identified based on the attribute of the image input from the external device 200.

In other words, the context of the external device 200 may be identified based on whether the image input from the external device 200 is a broadcasting content provided in real time or a pre-stored content such as VOD, whether an object such as a specific UI is included in the image input from the external device 200, and what function the UI provides (e.g., a UI for requiring an additional user command or a UI for providing specific information), etc.

The processor 120 may identify the context of the external device 200 by using the image input from the external device 200.

The processor 120 may be provided with additional data for identifying the content from the external device 200 that inputs an image to the electronic apparatus 100 in order to identify whether the input image is a broadcasting content broadcasted in real time, or a pre-stored content such as VOD.

The processor 120 may analyze the image itself input from the external device 200, and identify whether the input image is a real-time broadcasting content. For example, the processor 120 may identify the input image to be a real-time broadcasting content upon the indication of an object such as a channel number in the image.

However, in this case, the input image may be a broadcasting content that a user recorded in advance. Therefore, the processor 120 may pre-store information on the broadcasting program schedule, which has been received from the external device 200, such as Electronic Program Guide (EPG) information, and then identify whether the input image coincides with the information on the program scheduled to be broadcasted at a present time from the currently identified channel number.

The processor 120 may confirm whether a specific UI is included in an image by analyzing the input image, and then identify whether the function provided by the UI can be performed by the electronic apparatus 100 and the external device 200.

The processor 120 may detect whether advertisement or a UI thereof are present apart from contents in an image by analyzing the image, and identify whether a UI for requiring a specific key input such as requesting access information or authentication information is input.

In this case, the processor 120 may capture an image input at a predetermined period of time and analyzing the captured image in order to analyze an image.

The method for analyzing an image by the processor 120 may include detecting whether an image contains text that is to be included in a specific broadcasting program through Optical Character Recognition (OCR), or detecting whether an image for a specific object such as logo, or character included in the specific broadcasting program is included through Template based approach.

The processor 120 may detect whether a specific UI is included in the same manner, or whether there are a notice of parental guidance and a password input window. It can be detected whether a screen focus moves to the password input window included in the UI such as the notice of parental guidance.

The processor 120 may identify whether there is an image characteristic matching a specific broadcasting program or a UI by analyzing sectional histogram of each image, or identify whether the image expressed in binary number has a matching section in order to analyze the input image.

The image capture frequency (cycle) at which the processor 120 captures an image may be set to, for example, twice per second. The disclosure is not limited thereto, but if the cycle is too short, overload may occur to the processor 120, and if the cycle is too long, a UI corresponding to each context to be described below may be displayed so late, thereby causing inconvenience to a user.

Meanwhile, the electronic apparatus 100 may use a 2 class recognition technique using Convolution Neural Network (CNN) as an image recognition method through artificial intelligence in order to identify which broadcasting program the input image is, or which UI is included in the input image.

Visual comprehension may be a technology for recognizing and processing an object as if it was perceived by human being, including object recognition, object tracking, image search, human recognition, scene understanding, spatial understanding, image enhancement, etc.

As described above, the processor 120 that analyzes the context of the external device 200, such as which image the external device 200 has input, based on the analyzed context of the external device 200, may control to display a UI including at least one key corresponding to the analyzed context of the external device 200.

The processor 120 may control to display a UI including at least one key for controlling the external device 200 given the analyzed context of the external device among a plurality of keys for controlling the external device 200.

The processor 120 may display a UI including at least one key corresponding to the analyzed context of the external device 200 on a display (not shown) of the electronic apparatus 100. The processor 120 may display the UI along with the image received from the external device 200.

The processor 120 may automatically provide the UI including at least one key corresponding to the context although a control command for displaying a specific key is not input to the electronic apparatus 100 from the remote control device 200 for controlling the electronic apparatus 100.

As an example embodiment of a UI providing method according to the disclosure, the processor 120 may control to display a UI corresponding to the type of input image. The type of input image may include a real-time broadcasting image, an image pre-stored in the external device 200, an image including a specific Ul, or the like.

If the input image is the real-time broadcasting image, the processor 120 may display a UI that enables channel and volume control, and if the input image is the image pre-stored in the external device 200, the processor 120 may display a UI that enables operations such as stop, rewind, etc. in displaying the image.

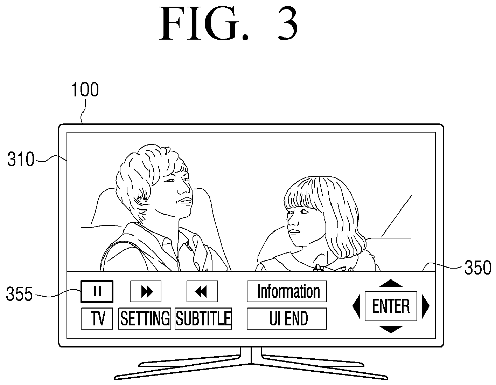

FIG. 3 shows a UI providing method of a processor when an input image is pre-stored in an external device 200.

Referring to FIG. 3, it is assumed that the processor 120 of the electronic apparatus 100 as a TV analyzes an image input from the external device 200 and displayed on a display 310 of the electronic apparatus 100, identifies that there is no object such as channel number, etc. and identifies that the input image is already completed and it corresponds to an image content stored in an external set-top box.

The processor 120 may automatically display a UI for image control 350 including keys corresponding to functions such as stop, fast-forward, rewind, etc. for controlling the stored image along with the input image.

Referring to FIG. 3, the UI for image control 350 provided by an electronic apparatus 500 may be a UI format using direction keys, an Enter key, and an instruction window 355, but the disclosure is not limited thereto. It could vary depending on how a user command is input.

For example, if a command is input through a remote control device (not shown) by a user, the UI for image control may have matching shapes with button keys provided in the remote control device.

In the case of displaying a UI controlled by user voice recognition, unlike FIG. 3, the processor 120 may display stop and rewind keys in text rather than in image, and it is possible to display a sentence "please say a control function you wish" on one side of the UI. When the user utters "rewind", the input image may be rewound.

In this case, for voice recognition, the processor 120 may be part of the Al to perform machine learning, or use the machine learning result performed by a separate Al. Linguistic understanding through the machine learning of the Al is a technique for recognizing and processing language/character of human being, including object recognition, object tracking, image search, human recognition, scene understanding, spatial understanding, image enhancement, etc.

When the type of input image is an image including a specific UI, the processor 120 may control to display a UI including a key for controlling the UI included in the input image among a plurality of keys for controlling the external device 200.

The processor 120 may control to display the UI including at least one key that can be input to the UI for requiring the key input among the plurality of keys when the UI requiring the key input is included in the image input from the external device 200.

When the UI requiring the key input is detected from the input image, although a control command for displaying a specific UI is not input from the remote control device 300, if a focus controlled by the remote control device 300 is disposed on the specific UI, the processor 120 may control to display the UI including the key that can be input to the UI.

For example, when a UI requiring the key input for inputting access information or authentication information such as parental guidance notice window is included in the image received from the external device 200, the processor 120 may control the electronic apparatus 100 to display a UI for number input so that a user may input a password that could remove a viewing age limit.

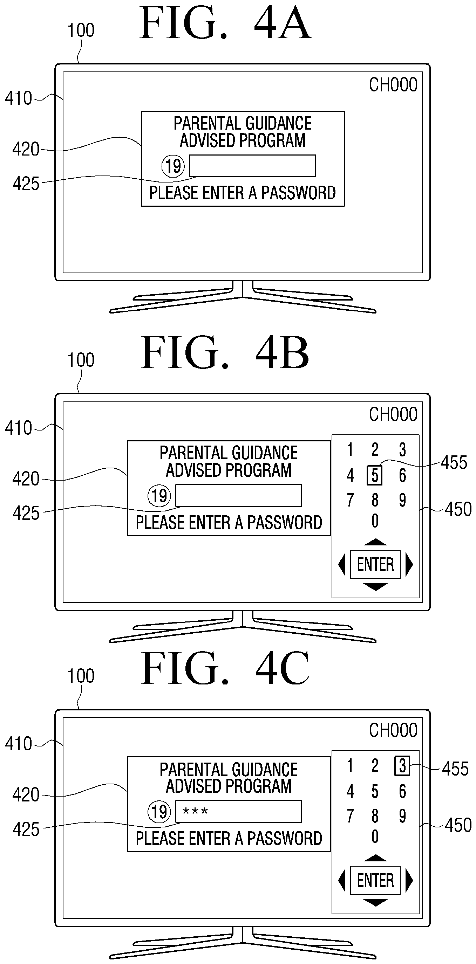

Referring to FIGS. 4A, 4B AND 4C show a UI providing method when the UI requiring the key input is included in the input image. Referring to FIGS. 4A, 4B AND 4C, it is assumed that the electronic apparatus 100, such as a TV, receives a real-time broadcasting image from the external device 200, which is a set-top box.

FIG. 4A illustrates a state where when a user changes a broadcasting channel of the electronic apparatus 100 by using the remote control device 300 and it is tune into a channel transmitting the parental guidance advised content, a UI for password input 420 for removing the viewing age limit is created.

The processor 120 may detect that the UI for password input 420 for releasing the viewing age limit is created by analyzing the captured image of the currently received broadcasting image, or analyzing the image.

FIG. 4B, the processor 120 that detects the UI for password input 420 may display, on a display 410, a UI for number input 450 to enable a user to easily input a password by using the remote control device 200 along with the input image without a separated user command.

The UI for number input 450 may include minimal input keys for inputting numbers used for the password input.

FIG. 4B, the UI for number input 450 may include direction keys, an Enter key, and an instruction window 455 indicting what number is input when the Enter key is selected.

FIG. 4C, when a user presses the Enter key by moving the instruction window 455 through the direction keys, it is confirmed that three digits may be input to an input window 425.

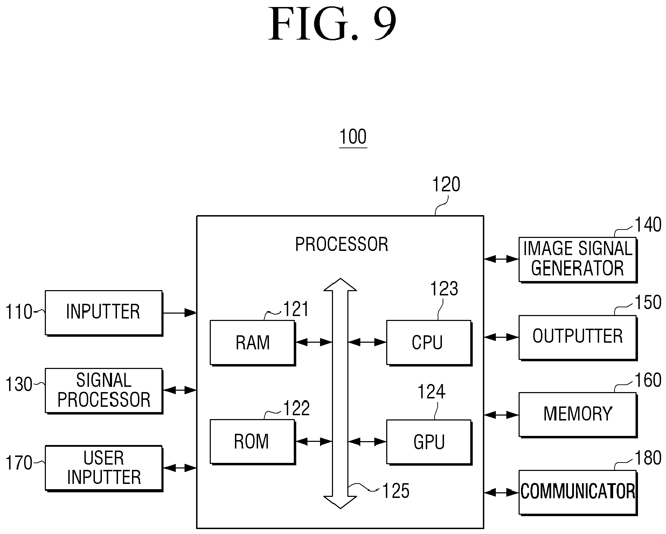

The processor 120 may detect the UI for password input 420 for the image received from the external device 200, and thus may transmit the numbers input to the electronic apparatus 100 for inputting the password to the external device 200 through a communicator (180 of FIG. 9) provided in the electronic apparatus 100.

When the numbers transmitted to the external device 200 by the processor 200 match the password, a normal adult content image without the UI for password input 420 may be input to the electronic apparatus 100 from the external device 200.

The direction keys and the Enter key included in the UI for number input 450 may be provided in the same or similar shape with matching button keys in the remote control device of the user.

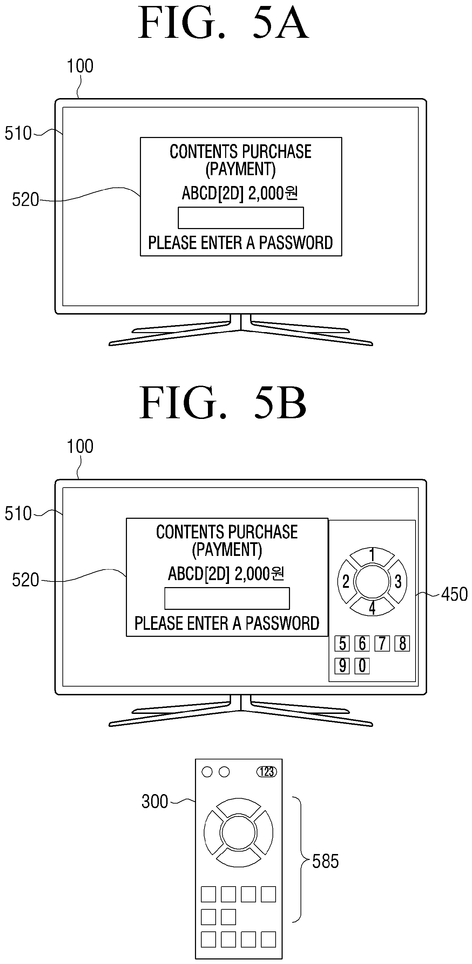

As another example embodiment of a UI providing method based on the context of the external device, FIGS. 5A and 5B illustrates the case of inputting a payment password for content purchase.

To be specific, referring to FIGS. 5A and 5B, when a content selected by a user is a paid content as a content provided from the external device 200, such as a set-top box, or a server by the electronic apparatus 100 as a TV, a UI for payment password input 520 may be displayed on a display 510 of the electronic apparatus 100 as shown in FIG. 5A.

The processor 120 may recognize the context of the image to which the UI for payment password input 520 is input, and without an additional control command of a user, control the display 510 so that the UI for number input 550 can be displayed along with the UI for payment password input 520 to allow a user to input a payment password as shown in FIG. 5B.

Referring to FIG. 5B, the UI for number input 550 may include keys respectively matching button keys 585 in shape and arrangement, which are provided in the remote control device 300 for controlling the electronic apparatus 100.

In this case, a user may be provided with a more intuitive key recognition and password input service.

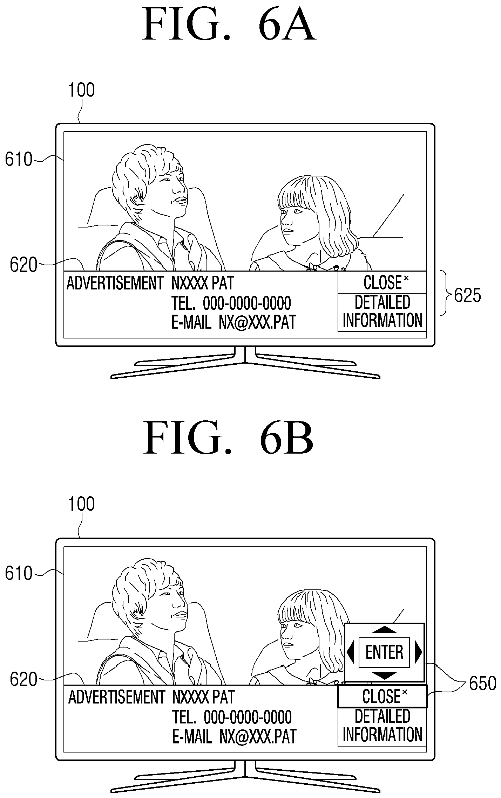

FIGS. 6A AND 6B shows another example embodiment to explain a UI providing method of the electronic apparatus 100 according to the disclosure.

Referring to FIGS. 6A AND 6B, it is assumed that an image input from an external device 200, which is a set-top box or a server, to the electronic apparatus 100 as a TV includes an advertisement pop-up window 620.

The processor 120 may detect the advertisement pop-up window 620 included in the input image.

The processor 120 may detect not only the presence of the advertisement pop-up window 620, but also the presence of selection items 625 such as "close", "detail information" for the advertisement pop-up window 620.

Referring to FIG 6B, the processor 120 that detects the advertisement pop-up window 620 an the selection items 625 may display a UI for advertisement 650 for receiving a user control command for the selection items 625 including "close" or "detail information" for the advertisement pop-up window 620 along with the image and advertisement.

For example, the UI for advertisement 650 may include the direction keys, the Enter key, and the instruction window such as "Close X" that shows which item is executed by pressing the Enter key as shown in FIG 6B.

If a user selects and inputs an item "close X" the advertisement pop-up window 620, the processor 120 may control a display 610 to display the input image without the advertisement pop-up window 620.

If the user selects a detail information item, the processor 120 may request additional information on the advertisement to the external device 200 or a separate server (not shown) through a communicator (180 of FIG. 9), receive the requested additional information, and display the information on the display 610.

The processor 120 may consider key use history of a user for the UI for case when displaying the UI for cases. The processor 120 may control the electronic apparatus 100 to display a UI including a key corresponding to the key use history among at least one key corresponding to the context of the external device 200 along with the input image.

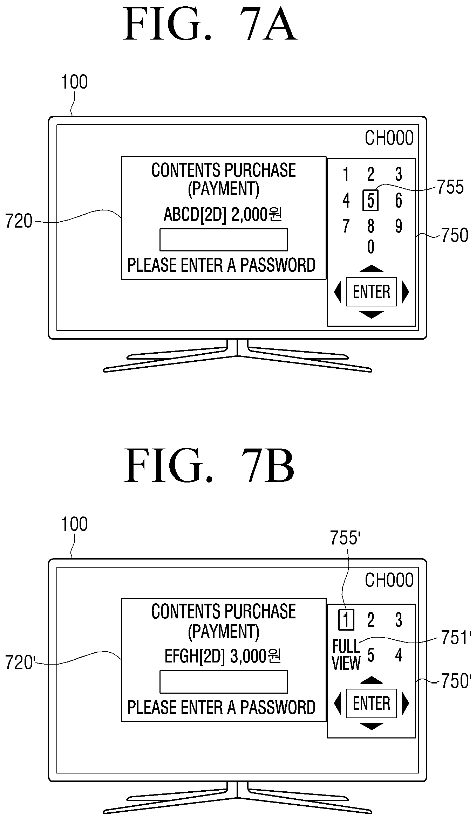

The processor 120 may identify which keys have been used and which keys have not been used by a user, and display a UI which includes the used keys as they are but includes the unused keys with excluding at least one of the unused keys, based on the user's history of using the keys in the analyzed context of the external device 200. The details thereof will be exemplified with reference to FIGS. 7A and 7B.

FIGS. 7A and 7B show a method for providing a UI corresponding to a context variably, specifically to show an example embodiment for considering key input history of a user for a UI provided based on the context.

Referring to FIG. 7A, in the similar manner to FIGS. 4 and 5, it is assumed that the processor 120 displays a UI for number input 750 corresponding to a UI for payment password input 720 when an image including the UI for payment password input 720 is input to the electronic apparatus 100 from the external device 200 according to a content purchase request command of a user.

However, if a user often purchases contents, it may cause inconvenience to a user to input the same password to the UI. This is particularly so when considering the fact that, recently, the design of the remote control has been improved and buttons have been simplified to eliminate the physical number buttons in the remote control and display a UI alone for inputting numbers.

For example, there may be case where the user has to input digits 1, 2, 3 and 4 in succession as a password in order to purchase a content.

The processor 120, when the UI for payment password input 720 is displayed by user's request to purchase a content, the history where the user has input digits 1, 2, 3 and 4 in succession each time may be stored in a memory (160 of FIG. 9).

Considering the stored history, if it is determined that the period for inputting a password to purchase a content by a user is shorter than a predetermined period, the processor 120 may simplify the UI for number input 750 and change the arrangement of the UI to be convenient considering that the user often purchases the content.

For example, referring to FIG. 7B, the processor 120 detecting a payment password input UI 720' included in the input image may control to display a UI for number input 750' of which key configuration and arrangement are different from the UI for number input 750 that is previously used

The processor 120 may use the feature that a user purchases a content shorter than a predetermined period and performs password input, and the feature that the user succeeds in purchasing by inputting password digits 1, 2, 3 and 4 in order each time.

The processor 120 may control the electronic apparatus 100 to display the UI for number input 750' where an instruction window 755' is disposed in digit 1 first input expected, the UI for number input 750' instead of the UI for number input 750 where an instruction window 755 is disposed at the center (number 5).

The processor 120 may control the electronic apparatus 100 to display the UI for number input 750' with the first input placed at the top of the expected digit 1 instead of the UI for number input 750 with the instruction window 755 located at the center (number 5) of multiple numbers.

Referring to FIG. 7B, instead of excluding digits 6, 7, 8, 9, and 0 that are expected to be unused in the UI for number input 750, a full view key 751' may be added so that a user request to display all the numbers can be input.

If the full view key 751' is selected according to the request of the user, the processor 120 may control to display the UI for number input 750. However, the disclosure is not limited thereto.

Information may be recommend through artificial intelligence when a processor of an electronic apparatus 700 identifies keys for constituting a UI based on key use history.

Inferential prediction in Al technology may be a technique for determining and logically inferring and predicting information, including knowledge/probability based reasoning, optimization prediction, preference base planning, and recommendation.

Knowledge representation in Al technology may be a technology for automating human experience information into knowledge data, including knowledge building (data generation/classification), knowledge management (data utilization), etc.

According to another example embodiment, the processor 120, while the image input to the electronic apparatus 100 from the external device 200 is displayed, when a control command for displaying a specific key is input to the external device 200, and an image including a UI for the specific key is input from the external device 200, may control to display a UI including at least one key used for the displayed image among keys for controlling the external device 200.

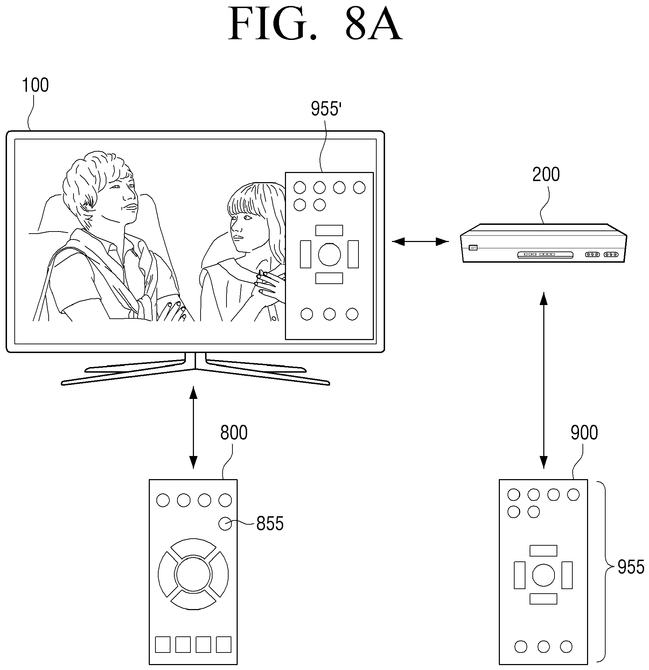

Referring to FIGS. 8A to 8C show an electronic apparatus 100, an external device 200, which is a set-top box, a remote controller for electronic apparatus 800 for controlling the electronic apparatus 100, and a remote controller for external device 900 for controlling the external device 200.

Referring to FIG. 8A, the image received by the electronic apparatus 100 from the external device 200 may include a UI for external device 955' for displaying an input button 955 of a remote controller for external device 900 for controlling the external device 200.

The external device 200 may input an image including the UI for external device 955' to the electronic apparatus 100 according to a control command of a user for the external device 200 or the setting of the external device 200 itself.

The processor 120 detecting that the UI for external device 955' is included together with the input image may remove keys related to functions that cannot be used for processing the input image by the external device 200 or keys related to functions that are not commonly used for the input image from the UI for external device 955' to thereby display the UI for external device 955' as a simplified UI 955".

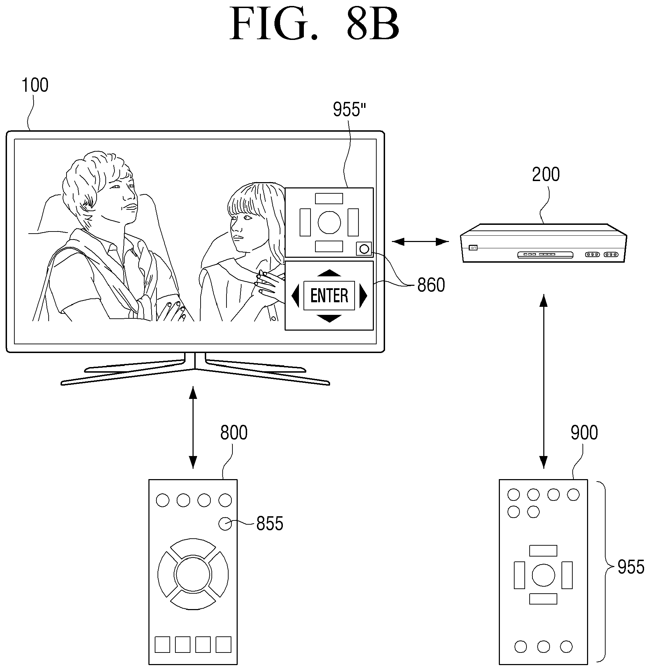

FIG. 8B is a diagram showing the simplified UI 955" excluding keys matched with all the buttons except for a direction button (generally, a key for channel and volume control) in the remote controller for external device 900 and some buttons among the keys provided in the UI for external device 955'.

The processor 120 may control the electronic apparatus 100 to display a separate UI for electronic apparatus 860 for the remote controller for electronic apparatus 800 so that a user can select and input keys in the simplified UI 955" by using the remote controller for electronic apparatus 800.

Referring to FIG. 8B, a UI for electronic apparatus 860 may include the direction keys, the Enter key, and the instruction window, but the disclosure is not limited thereto.

Referring to FIG. 8A, the electronic apparatus 100 may display the simplified UI 955" and the UI for electronic apparatus 860 as shown in FIG. 8B by a UI providing command for an electronic apparatus transmitted to the electronic apparatus 100 by the remote controller for electronic apparatus 800 by pressing a predetermined UI providing button for electronic apparatus 855 provided in the remote controller for electronic apparatus 800 by a user as shown in FIG. 8A.

Alternatively, displaying the simplified UI 955" and the UI for electronic apparatus 860 may be a voice recognition result of utterance corresponding to a UI providing command for electronic apparatus by the electronic apparatus 100.

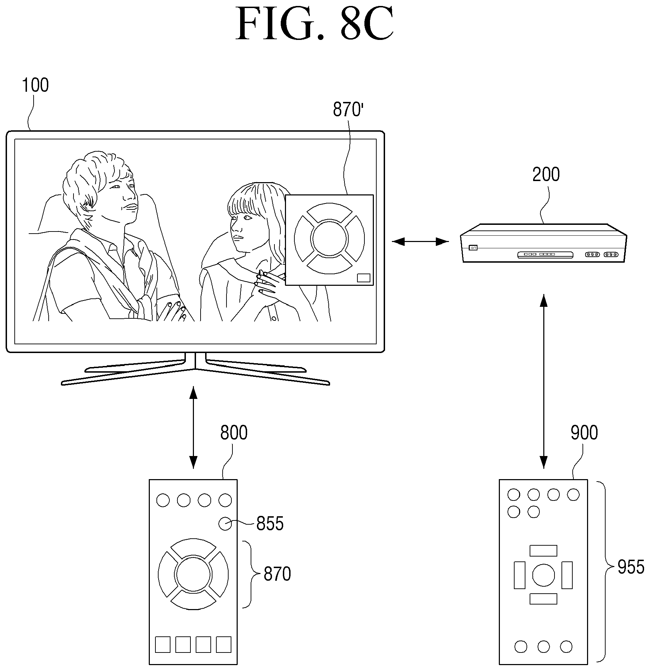

Referring to FIG. 8C, the processor 120 may remove the UI for external device 955' considering a function that can be used in the context, or a function that is mainly used, and display a UI for electronic apparatus 870' including only the keys matching buttons 870 in shape corresponding to the mainly used functions among the buttons of the remote controller for electronic apparatus 800, along with the input image.

Referring to FIG. 8A, the processor 120 may remove the UI for the external device 955' and display the UI for electronic apparatus 870' as shown in FIG. 8C by a UI providing command for electronic apparatus transmitted to the electronic apparatus 100 from the remote controller for electronic apparatus 800 by pressing the predetermined UI providing button for electronic apparatus 855 provided in the remote controller for electronic apparatus 800 by a user as shown in FIG. 8A..

Alternatively, the display of the UI for electronic apparatus 870' may be the result of voice recognition of the utterance corresponding to a UI providing command for electronic apparatus by the electronic apparatus 100.

FIG. 9 is a block diagram to explain detailed configuration of an electronic apparatus according to various embodiments of the disclosure.

Referring to FIG. 9, an electronic apparatus 100 may include an inputter 110, a processor 120, a signal processor 130, an image signal generator 140, an outputter 150, a memory 160, a user inputter 170, and a communicator 180.

The inputter 110 may receive broadcasting contents (or, broadcasting signals). The broadcasting contents may include image, audio and additional data (e.g., EPG).

The inputter 110 may receive broadcasting contents in a data format from an external device such as a set-top box or a server. The inputter 110 may include at least one of a High-Definition Multimedia Interface (HDMI) input terminal, a component input terminal, a PC input terminal or a USB input terminal

The inputter 100 may receive broadcasting contents from various sources such as terrestrial broadcasting, cable broadcasting, satellite broadcasting, internet broadcasting, etc.

For example, the inputter 110 may include a tuner (not shown), a demodulator (not shown), an equalizer (not shown), etc. to receive the broadcasting contents transmitted from a broadcasting station.

The processor 120 may include a random access memory (RAM) 121, a read only memory (ROM) 122, a central processing unit (CPU) 123, a graphic processing unit (GPU) 124, and a system bus 134, etc. to control the overlap operation and may perform operations and data processing related to the control of other constituent elements included in the electronic apparatus 100.

The RAM 121, ROM 122, CPU 123, GPU 124, or and the like may be connected to one another through a system bus and transmit and receive various data and signals.

The signal processor 130 may perform signal processing on contents such as an image received through the inputter 110.

To be specific, the signal processor 130 may perform operations such as decoding, scaling and frame rate conversion of an image constituting a content, and process a signal to be output from a display (not shown) of the outputter 150.

The signal processor 130 may perform signal processing on audio constituting a content such as decoding, and process a signal to be output from an audio outputter (not shown) of the outputter 150.

The image signal generator 140 may generate a Graphic User Interface (GUI) to provide to a user. The image signal generator 140 may add the generated GUI to an image processed by the signal processor 130.

The outputter 150 may include a display (not shown) for displaying the image output from the signal processor 130 and the GUI, etc. generated by the image signal generator 140, and an audio outputter (not shown) for outputting the audio output from the signal processor 130.

In this case, the display (not shown) may be implemented with a liquid crystal display (LCD), an Organic Light Emitting Diodes (OLED) display or the like, and an audio outputter (not shown) may be embodied as a speaker (not shown), an external output terminal (not shown), and the like.

The memory 160 may be used for image analyzing specific contexts of the electronic apparatus 100 and the external device 200, and may store specific images included in an image corresponding to each context, or a UI for each context. The memory 160 may be embodied as various storage mediums such as a hard disk, a non-volatile memory, a volatile memory, etc.

The user inputter 170 may receive various commands for the electronic apparatus 100 of a user. For example, when a user presses a specific button of the remote control device 300 for controlling the electronic apparatus 100, the user inputter 170 may receive a remote control signal to execute the function corresponding to the button from the remote control device 300.

The user inputter 170 may receive various remote control signals. For example, the user inputter 170 may receive a remote control signal for performing channel change, volume control, etc. and the processor 120 may change a channel, or control a volume of the electronic apparatus 100 according to the received remote control signal.

The user input 170 may include a microphone (not shown) that receives a user voice to control the electronic apparatus 100 in the form of utterance of a user.

The user inputter 170 may be embodied as an input panel. The input panel may be embodied as a touch pad, a key pad having various functional keys, numeric keys, special keys, and character keys, or a touch screen.

When the user inputter 170 that receives a remote control signal or a user command such as voice or touch transmits the command to the processor 120, the processor 120 may perform the function of the electronic apparatus 100 corresponding to the command.

The communicator 180, when a user command for selecting one of at least one key included in a UI displayed on the electronic apparatus 100 is input to the user inputter 170, may transmit a request for performing the function corresponding to the input user command to the external device 200.

The communicator 180 may transmit only the information on the key corresponds to the input command signal of the user to the external device 200, or the like.

The communicator 180 may receive information on the UI included in the image input through the inputter 110 from the external device 200 from the external device 200. The information on the UI may include information on an image input with the UI, information on the use of the UI included in the input image, information on functions respectively performed by keys provided in the UI contained in the input image, etc.

According to another example embodiment, the electronic apparatus 100 may use an external sever (not shown) when analyzing the contexts of the electronic apparatus 100 and the external device 200.

To be specific, when the electronic apparatus 100 transmits the image input from the external device 200 to the external server 200, the external server may analyze the image captured in a preset time interval and identify the context of the external device 200 based on the image input from the external device 200.

The external server may identify the UI suitable for the context based on the identified context, transmit the UI to the electronic apparatus 100, and control the electronic apparatus 100 to display the UI corresponding to the context of the external device 200 together with the input image.

In addition, when the electronic apparatus 100 analyzes the image input from the external device 200, which is captured in a predetermined time unit, identifies the context, and transmits the identified context to the external server, the external server may retrieve or identify the UI corresponding to the context and transmit the identified UI to the electronic apparatus 100.

When the electronic apparatus 100 transmits the identified context to the external server, the external server may transmit the data to display the UI corresponding to the identified context to the electronic apparatus 100, and the electronic apparatus 100 may display the UI corresponding to the identified context together with the input image based on the received data.

According to an embodiment, there could be no display for displaying an image input in the electronic apparatus 100. In other words, the electronic apparatus 100 may be a set-top box, and the external device 200 may be a TV.

The electronic apparatus 100 may receive an image from a broadcasting station or an external server. The electronic apparatus 100 may analyze the input image, identify what function can be provided for the input image by the electronic apparatus 100 and the external device 200, or which attribute the input image has, identify a UI based on the identified context, and transmit the UI to the external device 200 along with the input image to display the UI on a display (not shown).

As described above, various example embodiments for the electronic apparatus 100 according to the disclosure have been described. The method for providing a UI of the electronic apparatus 100 according to the disclosure will be described.

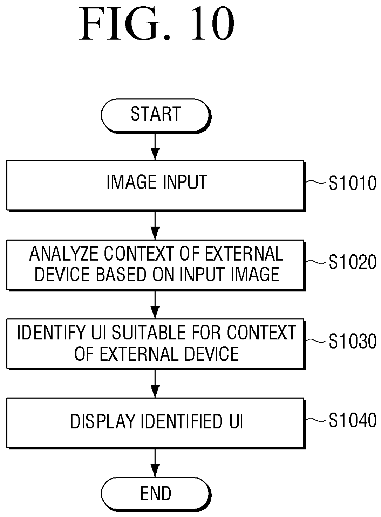

FIG. 10 is a flowchart to explain a method for providing a contextual UI of an external device 200 of example embodiments of the disclosure.

Referring to FIG. 10, an electronic apparatus 100 may receive an image from an external device 200 at operation S1010. The electronic apparatus 100 that receives an image may consider not only the attribute of the input image but also what function the external device 200 can perform and analyze the context of the external device 200 based on the input image at operation S1020.

The electronic apparatus 100 may identify a UI including a key for a function for controlling the external device 200 in the analyzed context at operation S1030. To be specific, the processor 120 of the electronic apparatus 100 may identify a UI including at least one key used in the analyzed context of the external device 200 among a plurality of keys that can control the external device 200.

The identified UI may be one of the Uls pre-stored in the memory 160 of the electronic apparatus 100, or may be a newly generated key to include only the key for the function that can control the electronic apparatus 100 in the analyzed context of the external device 200.

The electronic apparatus 100 that identifies a UI for the context of the external device 200 may control the identified UI to be displayed on the electronic apparatus 100 or the external device 200 at operation S1040.

The electronic apparatus 100 may control the electronic apparatus 100 or the external device 200 to display the identified UI along with the input image.

The electronic apparatus 100 may automatically display the identified UI according to or without a control command of a user.

The controlling may comprise identifying the type of image input from the external device 200 and control to display the UI corresponding to the identified type. The type of input image may be at least one of a real-time broadcasting image, an image pre-stored in the external device 200or an image including a specific UI.

The controlling may comprise, based on a UI requiring key input being included in the image input from the external device 200, controlling to display a UI including at least one key to be input to the UI requiring the key input corresponding to the context of the external device 200 among a plurality of keys for controlling the external device 200.

The controlling may comprise, based on the image including the UI requiring the key input from the external device 200 being displayed, when a focus controlled by the remote control device 300 is disposed on the UI requiring the key input, controlling to display the UI including at least one key to be input to the UI requiring the key input among the plurality of keys.

The UI requiring the key input may include an input window for inputting at least one of access information or authentication information.

The controlling may comprise, based on an image including a UI for a specific key being received from the external device 200 according to a control command for displaying a specific key while the image input from the external device 200 is being displayed, controlling to display the UI including at least one key to be used for the displayed image among specific keys.

The controlling may comprise, based on key use history in the analyzed context of the external device 200, controlling to display the UI including a key corresponding to the key use history among at least one key corresponding to the context of the external device 200.

The controlling may comprise, based on key use history, determining a key used in the analyzed context of the external device 200 among the at least one key, and controlling to display the UI including the used key among the at least one key.

As described above, according to a UI providing method disclosed in an embodiment of the disclosure, the electronic apparatus 100 may identify the context of the external device 200 in detail based on the input image, and provide the UI most suitable for the identified context to a user. The user may be provided with the UI in the context without a further command in advance.

Meanwhile, the various embodiments described above may be implemented in a recording medium that can be read by a computer or a similar device using software, hardware, or a combination thereof.

According to hardware implementation, the example embodiments described in the disclosure may be implemented by using at least one of application specific integrated circuits (ASICs), digital signal processors (DSPs), digital signal processing devices (DSPDs), programmable logic devices (PLDs), field programmable gate arrays (FPGAs), processors, controllers, micro-controllers, microprocessor electrical units for performing other functions .

In some cases, embodiments described herein may be implemented by a processor 130 itself. According to software implementation, embodiments such as the procedures and functions described herein may be implemented in separate software modules. Each of the software modules may perform one or more of the functions and operations described herein.

The non-transitory computer readable medium refers to a medium that stores data semi-permanently rather than storing data for a very short time, such as a register, a cache, and a memory, and is readable by an apparatus. Specifically, the above-described various applications or programs may be stored in a non-transitory computer readable medium such as a compact disc (CD), a digital versatile disk (DVD), a hard disk, a Blu-ray disk, a universal serial bus (USB) memory stick, a memory card, and a read only memory (ROM), and may be provided.

The non-transitory computer readable medium refers to a medium that stores data semi-permanently rather than storing data for a very short time, such as a register, a cache, and a memory, and is readable by an apparatus. Specifically, the above-described various applications or programs may be stored in a non-transitory computer readable medium such as a compact disc (CD), a digital versatile disk (DVD), a hard disk, a Blu-ray disk, a universal serial bus (USB) memory stick, a memory card, and a read only memory (ROM), and may be provided.

Although exemplary embodiments have been shown and described, it will be appreciated by those skilled in the art that changes may be made to these exemplary embodiments without departing from the principles and spirit of the disclosure. Accordingly, the scope of the present disclosure is not construed as being limited to the described exemplary embodiments, but is defined by the appended claims as well as equivalents thereto.

## Claims

1. An electronic apparatus, comprising:
an inputter comprising circuitry and configured to receive an image from an external device; and
a processor configured to analyze a context of the external device based on the received image, and control to display a user interface (Ul) including at least one key corresponding to the analyzed context of the external device.

2. The electronic apparatus as claimed in claim 1, wherein the processor is configured to control to display the UI including the at least one key for controlling the external device in the analyzed context of the external device among a plurality of keys for controlling the external device.

3. The electronic apparatus as claimed in claim 2, wherein the processor is configured to control to display a UI corresponding to a type of the received image, and
wherein the type of the received image is at least one of a real-time broadcasting image, an image pre-stored in the external device and an image including a specific UI.

4. The electronic apparatus as claimed in claim 2, wherein the processor is configured to, based on a UI requiring a key input being included in the image received from the external device, control to display a UI including at least one key that is input to the UI requiring the key input among the plurality of keys.

5. The electronic apparatus as claimed in claim 4, wherein the processor is configured to, based on the image including the UI requiring the key input received from the external device being displayed being a focus controlled by a remote control device is disposed on the UI requiring the key input, control to display the UI including the at least one key that is input to the UI requiring the key input among the plurality of keys.

6. The electronic apparatus as claimed in claim 4, wherein the UI requiring the key input includes an input window for inputting at least one of access information and authentication information.

7. The electronic apparatus as claimed in claim 2, wherein the processor is configured to, based on an image including a UI for a specific key being received from the external device according to a control command for displaying specific keys while the image received from the external device is being displayed, control to display a UI including at least one key available for the displayed image among the specific keys.

8. The electronic apparatus as claimed in claim 2, wherein the processor is configured to, based on key use history in the analyzed context of the external device, control to display a UI including a key corresponding to the key use history among the at least one key corresponding to the analyzed context of the external device.

9. The electronic apparatus as claimed in claim 8, wherein the processor is configured to, based on the key use history, identify the key used in the analyzed context of the external device among the at least one key, and control to display a UI including the used key.

10. A method of providing a user interface (Ul) for an electronic apparatus, the method comprising:
receiving an image from an external device;
analyzing a context of the external device based on the received image; and
controlling to display a user interface (Ul) including at least one key corresponding to the analyzed context of the external device.

11. The method as claimed in claim 10, wherein the controlling comprises controlling to display the UI including the at least one key for controlling the external device in the analyzed context of the external device among a plurality of keys for controlling the external device.

12. The method as claimed in claim 11, wherein the controlling comprises controlling a UI corresponding to a type of the received image, and
wherein the type of the received image is at least one of a real-time broadcasting image, an image pre-stored in the external device or an image including a specific UI.

13. The method as claimed in claim 11, wherein the controlling comprises, based on a UI requiring a key input to the image received from the external device being included, controlling to display the UI including the at least one key that is input to the UI requiring the key input among the plurality of keys.

14. The method as claimed in claim 13, wherein the controlling comprises, based on the image including the UI requiring the key received from the external device being displayed while a focus controlled by a remote control device is being disposed on the UI requiring the key input, controlling to display the UI including the at least one key that is input to the UI requiring the key input among the plurality of keys.

15. The method as claimed in claim 13, wherein the UI requiring the key input includes an input window for inputting at least one of access information or authentication information.
